(19) Europäisches Patentamt / European Patent Office / Office européen des brevets

(11) **EP 4 250 509 B1**

(12) **EUROPEAN PATENT SPECIFICATION**

(45) Date of publication and mention
of the grant of the patent:
**15.07.2026  Bulletin 2026/29**

(21) Application number: **22164573.2**

(22) Date of filing: **25.03.2022**

(51) International Patent Classification (IPC):
**H02J 3/14** *(2026.01)*    **H02J 3/38** *(2026.01)*

(52) Cooperative Patent Classification (CPC):
**H02J 3/381; H02J 3/14;** H02J 2101/20;
H02J 2103/30; H02J 2105/53

(54) **METHOD OF OPERATING A POWER DISTRIBUTION SYSTEM**

VERFAHREN ZUM BETRIEB EINES STROMVERTEILUNGSNETZWERKS

PROCÉDÉ DE FONCTIONNEMENT D'UN SYSTÈME DE RÉPARTITION DE PUISSANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.09.2023  Bulletin 2023/39**

(73) Proprietor: **CSEM Centre Suisse d'Electronique et
de
Microtechnique SA  - Recherche et
Développement
2002 Neuchâtel (CH)**

(72) Inventors:
• **SCHARNHORST, Paul
2000 Neuchâtel (CH)**

• **SCHUBNEL, Baptiste
3098 Schliern bei Köniz (CH)**
• **CARRILLO RANGEL, Rafael Eduardo
1020 Renens (CH)**
• **ALET, Pierre-Jean
2000 Neuchâtel (CH)**
• **JONES, Colin
1110 Morges (CH)**

(74) Representative: **e-Patent SA
Rue Saint-Maurice 12
Case postale
2001 Neuchâtel 1 (CH)**

(56) References cited:
**US-A1- 2018 287 382**

## Description

### Technical field

The present invention relates to power distribution systems comprising at least one uncontrollable and intermittent power source such as a solar or wind generation system, and to the mitigation of the problems related thereto.

### State of the Art

As wind and solar power generation becomes a larger proportion of the energy mixture in power grids, the problems related to the intermittency of the power produced thereby become greater, in order that the power generated and fed into the power grid balances the energy consumed.

The traditional method to carry out grid balancing is to balance the supply side of the equation with relatively fast-acting and controllable power sources such as hydroelectric and combined-cycle gas generation. As a result, when wind and/or solar production is lower, these controllable power sources are ramped up to make up the shortfall, and as wind and/or solar production rises, they are ramped down. However, as the proportion of the energy mix produced by intermittent, uncontrollable energy sources increases, this supply-side strategy is no longer sufficiently responsive, and requires more and more gas generation standing idle or working at low power and low efficiency levels in order to provide the required buffer of generation capacity.

Various strategies have been proposed to counter this by manipulating the demand side of the equation. In essence, certain electrical power consuming resources have a degree of flexibility in their operation, due to acceptable variations in output, and an example of a computer-implemented method for forecasting load flexibility based on a nominal power demand is disclosed in US2018/287382. For instance, a building with a heat-pump operated heating and/or cooling (hereinafter "HVAC") system has a certain thermal inertia in the building itself, and an acceptable temperature range for the occupants (e.g. 19-24°C), thermal storage tanks which can contain a larger or smaller quantity of energy, and so on, which permits consumption of more or less power when needed, compared to the consumption at a nominal setpoint.

Other examples of electrical power consuming resources which also present a degree of flexibility are electric vehicle charging stations, domestic battery arrays, drainage pumps, pumps for water supply reservoirs, pumped storage systems and so on. In essence, any such resource which has flexibility in its operation, due to for instance a permissible variation in temperature, water level, state of charge or similar, can be used for electrical power demand management by absorbing more or less power as required, within acceptable limits.

In order to encourage the operator of the electrical power consuming resource to carry out demand management, the grid operator can vary the price of electricity depending on whether there is too much or too little generation occurring, with the operator adjusting the power consumed on the basis of these signals in response to these incentives. However, this approach presents drawbacks in relying upon the consumer to voluntarily follow the incentives presented. Since it can take time for the price signal to be computed, transmitted and acted upon (if at all), this approach is still relatively slow and insufficiently flexible.

The aim of the present invention is thus to propose a method of operating a power distribution system which at least partially overcomes the drawbacks of the prior art.

### Disclosure of the Invention

More precisely, the invention relates to a method of operating an electrical power distribution system, said power distribution system comprising:

- at least one electrical power generator with uncontrollable variable supply, such as a wind turbine, photovoltaic cell system or similar;
- at least one electrical power consuming resource with controllable demand and subject to at least one state constraint, said electrical power consuming resource with controllable demand being arranged to be controlled by an internal controller. Such an electrical power consuming resource may for instance be a building provided with a heating and/or cooling system using electrical power, a pump for drainage or for filling a reservoir, a battery array, an electric vehicle charging system, or similar, and the state constraint may be for instance a particular temperature range within a building or a thermal storage tank, a water level range for a pump, a state of charge range for a battery system or similar;
- a system controller adapted to send requests to said internal controller to request variation in said controllable demand, i.e. to request that the resource consume more or less power than it otherwise would in the absence of such requests;
- an electrical power distribution network arranged to transmit electrical power from said at least one electrical power generator to said at least one electrical power consuming resource with controllable demand.

This method comprises steps of:

- determining a virtual battery model of said at least one electrical power consuming resource with controllable demand, thereby modelling it as if it were a battery storing energy in analogy to the resource's ability to use more or less power than it would by default while still remaining within an acceptable state;
- determining a set of feasible power consumption requests that said electrical power consuming resource with controllable demand can fulfil within said state constraint (i.e. requests which will not cause the resource to exceed or undershoot predetermined functional limits, such as a comfortable temperature range in a building, a water level on the input or output side in the case of a pump, a maximum or minimum state of charge of a battery system, etc.) on the basis of said virtual battery model in function of the current state of the electrical power consuming resource with controllable demand and external conditions; and
- sending requests from said system controller to said electrical power consuming resource with controllable demand to increase or decrease its power consumption on the basis of power available on said electrical power distribution network and said set of feasible power consumption requests.

Said virtual battery model comprises:

- a first block which receives a current state of said electrical power consuming resource with controllable demand (e.g. the internal temperature in the case of a building, water levels in the case of a pump, a state of charge in the case of a battery array or similar), and current external conditions (e.g. which influence the normal consumption of power by the resource, such as temperature and insolation in the case of a building, water flows in the case of a pump etc.), said first block being active when said system controller does not request the resource to consumer more or less power than it otherwise would (i.e. sends a null request) and determining a state change of said electrical power consuming resource with controllable demand due to nominal behaviour of said internal controller (i.e. how the internal controller will affect the state of the resource when operating normally) ;
- a second block which receives said current request from said system controller to consume more or less power, current external conditions and a prediction of said external conditions at a time in the future (typically 15 minutes or 1 hour in the future), said second block outputting a state change of said electrical power consuming resource with controllable demand due to predicted changes in external conditions (i.e. how the internal controller will affect the state of the resource on the basis of future predicted changes in the external conditions and in function of the current request). The second block is active only when said system controller requests that said electrical power consuming resource with controllable demand consume more or less power, i.e. when the request is non-null;
- a third block which receives the current request and determines a state change of said electrical power consuming resource with controllable demand incurred by said current request,

said state changes being combined such that said virtual battery model outputs a predicted state at said time in the future on the basis of a current state, of said current external conditions, of said prediction of said external conditions at said time in the future, and of said current request.

As a result, the system controller obtains from the virtual battery model sets of feasible requests for the resource to consume more or less power than it would do with no such request being sent (i.e. its default operation), enabling the operator to be able to send feasible requests to the electrical power consuming resource with controllable demand in order to balance power on the electrical power distribution network by influencing the demand this resource in a way that does not cause it to enter an unacceptable state outside its state constraint. Since this can be influenced directly by the system controller, the response of the resource(s) in question can be very rapid, enabling rapid real-time balancing of the electrical power distribution network.

Advantageously, step of determining a set of feasible power consumption requests is carried out by a flexibility forecasting system on the basis of:

- the current state of said electrical power consuming resource;
- current external conditions;
- predictions of external conditions at times in the future,
- a confidence level of the ability that said electrical power consuming resource with controllable demand can fulfil a request;
- uncertainty in said set of feasible power consumption requests, e.g. by exploiting a coherent risk measure such as the Conditional Value at Risk;

said flexibility forecasting system outputting a maximum and minimum power consumption request that can be fulfilled.

Advantageously, said virtual battery model comprises parameters determined by the steps of:

- operating said electrical power consuming resource with controllable demand under nominal conditions while collecting measurements relating to said electrical power consuming resource with controllable demand and of corresponding external conditions;
- generating a first set of state values on the basis of said measurements and said external conditions, which hence reflect how the internal controller influences the state of the resource under default conditions without being requested to consume more or less power;
- operating said electrical power consuming resource with controllable demand during periods in which increased power consumption is requested and during periods in which decreased power consumption is requested while collecting measurements relating to said electrical power consuming resource with controllable demand and of corresponding external conditions;
- generating a second set of state values on the basis of said measurements and said external conditions obtained during periods in which increased power consumption is requested and during periods in which decreased power consumption is requested, which reflect how the internal controller affects the resource when asked to consume more or less power than it otherwise would if left to its own devices; and
- determining said parameters on the basis of said first and second set of state values and said corresponding external conditions.

Advantageously, said virtual battery model is expressed as

$$\hat{s}_{t+1} = \hat{s}_t + p^+ r_t^+ + p^- r_t^- + p_f(f(e_t) - \hat{s}_t)\chi_{r_t} + \big(f(e_{t+1}) - f(e_t)\big)\big(1 - \chi_{r_t}\big)$$

wherein :

$\hat{s}_{t+1}$ is the predicted state of said electrical power consuming resource with controllable demand at a time $t + 1$ in the future;

$\hat{s}_t$ is the state of said electrical power consuming resource with controllable demand at time $t$;

$p^+$ is a parameter that determines a linear state change of said electrical power consuming resource with controllable demand due to positive relative power consumption requests;

$r_t$ is a relative power consumption request at time $t$, i.e. that the electrical power consuming resource with controllable demand is requested to consume more or less power than it otherwise would;

$r_t^+$  is the positive part of the relative power consumption request at time $t$, such that $r_t^+ = \max\left(r_t, 0\right)$, i.e. that the electrical power consuming resource with controllable demand is requested to consume more power than it otherwise would;

$p^-$ is a parameter that determines a linear state change of said electrical power consuming resource with controllable demand due to negative relative power consumption requests

$r_t^-$  is the negative part of the relative power consumption request at time $t$, such that $r_t^- = \min\left(r_t, 0\right)$, i.e. that the electrical power consuming resource with controllable demand is requested to consume less power than it otherwise would;

$p_f$ is a parameter that determines how fast the state of said electrical power consuming resource with controllable demand returns to its nominal value if no request is received;

$f(e_t)$ is a function of a vector of measurements of external conditions $e_t$ at time $t$;

$\chi_{r_t}$ has a value of 1 if a request $r$ at time $t$ is zero, and has a value of 0 otherwise;

$f(e_{t+1})$ is a function of a vector of predictions of external conditions $e_{t+1}$ at future time $t + 1$.

Advantageously, said set of feasible power consumption requests is:

$$\mathcal{R}_k(s_0) \quad = \bigcap_{l=0}^{k} \left\{r : \tilde{b}_l \le \tilde{a}_l \tilde{r}_l\right\}$$

with $\tilde{b}_l = clcl^\mathsf{T}$ and $\tilde{a}_l = [a_l(p^+, p^-),\, -a_l(p^+, p^-)]^\mathsf{T}$
wherein:

$p^+$ is a parameter that determines a linear state change of said electrical power consuming resource due to positive relative power consumption requests;

$p^-$ is a parameter that determines a linear state change of said electrical power consuming resource due to negative relative power consumption requests;

$k$ is the number of discrete time steps of operation of said electrical power consuming resource;

$r$ is a relative power consumption request trajectory, i.e. that the electrical power consuming resource with controllable demand is requested to consume more or less power than it otherwise would under control of its internal controller alone;

$\tilde{r}_l$ is the collection of alternating positive and negative parts of a relative consumption request trajectory up to request $l$;

$s_0$ is the state of the electrical power consuming resource at the current time;

$c(l)$ is the predicted state at time $l$ without requests;

$a_l(p^+, p^-)$ is the vector of coefficients of the state change due to requests up to time $l$;

$\tilde{b}_l$ is the vector of negative distances of the predicted state $l$ without requests to a lower and upper state bound;

$\tilde{a}_l$ is the vector of positive and negative coefficients of the state change due to requests up to time $l$;

The invention finally relates to a computer program product comprising instructions which, when the program is executed by a computer, cause the computer to carry out the method steps of the method as defined above.

## Brief description of the figures

Further details of the invention will become apparent upon reading the following description, in reference to the appended drawings in which:

- Figure 1 is a schematic representation of an electrical power distribution system;
- Figure 2 is a schematic representation of a virtual battery model as used in the invention;
- Figure 3 is a schematic representation of a flexibility forecasting system as used in the invention;
- Figure 4 is a flow diagram of the general principle of a first phase of training the virtual battery model;
- Figure 5 is a flow diagram of the general principle of a second phase of training the virtual battery model;
- Figure 6 illustrates plots of flexibility envelopes for day 3 of test data, in which the true flexibility envelope is on the left, the top row represents flexibility envelope predictions for different values of $j$, and the bottom row represents the difference of the predicted envelopes to the true envelope; and
- Figure 7 illustrates predicted vs truly available timesteps in the flexibility envelopes for different values of $j$ on day 3 of the test data, the bottom right showing the average percentage of infeasible prediction vs mean absolute prediction error for different values of $j$ over 10 days.

## Embodiments of the invention

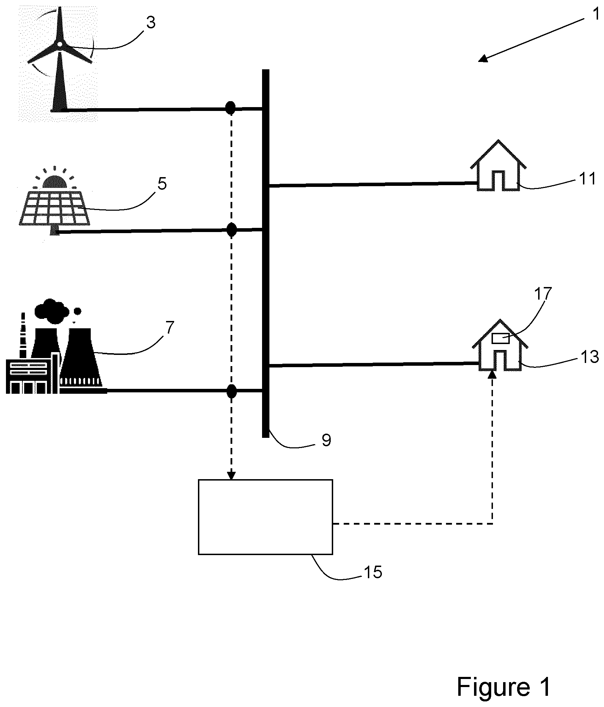

Figure 1 illustrates schematically an electrical power distribution system 1, comprising a number of electrical power generators 3, 5, 7, of which at least one has an uncontrollable variable supply. As illustrated, these are at least one wind turbine 3 and at least one photovoltaic (PV) array 5. Furthermore, the system 1 comprises a conventional power generator 7, in order to provide a base load. The total power production capacity hence varies as the sum of the nominal generating capacity of the electrical power generators 3, 5, 7 at any given time, with the proviso that the generation of the PV array 5 is zero at night, and that of the wind turbines 3 is zero when the windspeed is out of the usable range. As a result, the conventional generation capacity must be able to cover the entire electrical demand when it is dark and windless or too windy.

Each of the electrical power generators 3, 5, 7 feeds the produced electricity into an electrical power distribution network 9, which supplies a number of electrical power consuming resources 11, 13 illustrated here as houses, at least one of which (indicated with reference sign 13 and referred to simply as "resource 13" in the foregoing in the interests of brevity) having controllable demand under the command of a system controller 15, which can be a physical controller or a virtual controller, e.g. based on software, cloud computing or similar. System controller 15 communicates with the internal controller 17 of resource 13, in order to control the behaviour of resource 13, namely its power consumption. The resource 13 may be controlled either in an on-off manner, implying pulse-width modulation to increase or decrease consumption averaged over time, or may be able to consumer power at different rates.

In the following the description, the concrete example of a building provided with an HVAC system with controllable demand is used as the electrical power consuming resource 13. However, as mentioned above, the exact same principle applies to other electrical power consuming resources with controllable demand are possible, such as water pumps (e.g. for draining, filling reservoirs for drinking water or pumped storage), electric vehicle charging stations, domestic battery arrays, or any other electrical power consuming resource which has at least a certain degree of controllable flexibility in its power consumption.

The electrical power distribution system 1 may comprise any number of such electrical power consuming resources 13 with controllable demand.

The key to the present invention is that the variable demand of the at least one resource 13 is commanded directly under the command of the system controller 15, which is itself controlled by the system operator on the basis of the power currently being produced by the electrical power generators 3, 5, 7. This direct control enables the power consumption of the at least one resource 13 to be varied very rapidly, without the lags associated with demand incentivization via a variable pricing mechanism.

In brief, each resource 13 is modelled analogously to a battery (i.e. a virtual battery model 19) to determine the range of power it can draw at any given time while still remaining within operational constraints (e.g. a comfortable interior temperature range for a building, a state of charge range for a battery, a level of water range for a pump and so on). This range can be expressed either as a maximum or minimum power level, or as a flexibility envelope, which provides availability time predictions of power levels changes from a given baseline, depending on the time of the day.

Furthermore, the use of a virtual battery model 19 enables empirical determination of the model rather than requiring an a priori model. This reduces computational burden and does not require knowledge of the details of each resource 13 with controllable demand, but does imply a training period in order to determine the model.

Another aspect of the invention is the incorporation of uncertainty quantification into the method, with risk measures being used to formulate

robust uncertainty sets which take the risk preferences of the operator of the electrical power consuming resource 13 in question.

At a basic level, the method of the invention comprises steps of:

- determining the virtual battery model 19 of the at least one resource 13,
- determining a set of feasible power consumption requests on the basis of said virtual battery model 19 in function of the current state of the resource 13 and the external conditions (e.g. temperature, insolation etc. in the case of a building provided with an HVAC system); and
- sending requests to the resource 13 to increase or decrease its power consumption on the basis of power available on the power distribution network and whether the requests comply with the set of feasible power consumption requests.

The generalities of the virtual battery model 19 model and the determination steps will be described first, and then the entire, rigorous methodology will be explained in detail.

## Virtual battery model 19: generalities

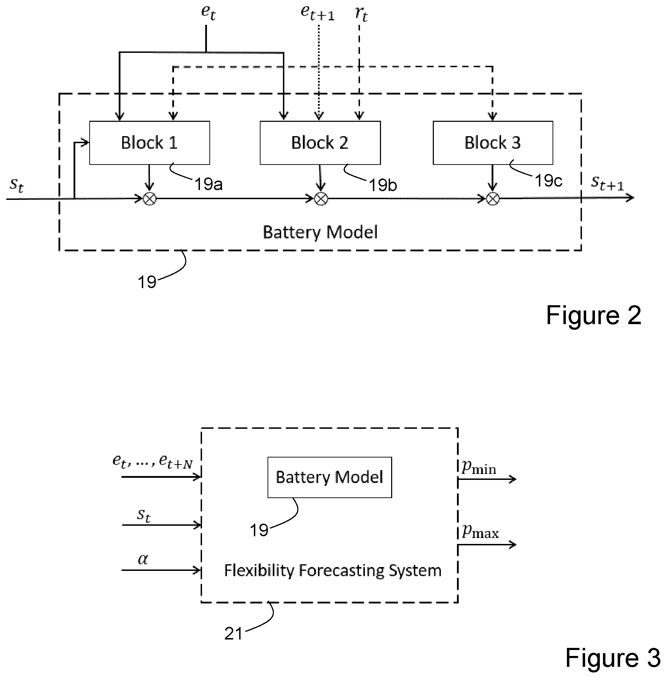

Figure 2 illustrates the general construction of the virtual battery model 19, and its three blocks.

First block 19a takes the current state $s_t$ of the resource 13 at time $t$, the current request $r_t$ (if any), and the current external conditions $e_t$ (e.g. temperature, irradiance etc.) to compute the state change due to nominal controller behavior. This is motivated by the intuition that the state is driven toward a nominal value in request-free periods. This nominal value is dependent on the behavior of the internal controller 17, which in turn is influenced by the external conditions like temperature or irradiance. This model does not require a specific internal controller 17 structure, but works for a variety of controllers.

Second block 19b takes $r_t$ and $e_t$, as well as a one-step prediction of the external conditions $e_{t+1}$ at timestep $t + 1$ to capture the state change due to changes in external conditions.

Third block 19c receives the request $r_t$ and determines the state change incurred by this request. When the resource 13 receives requests, the sign of the requests determines the direction of the change. This can be envisioned as charging or discharging the virtual battery with thermal energy.

The virtual battery model 19 hence predicts the new state $s_{t+1}$ at timestep $t + 1$ from inputs as discussed above.

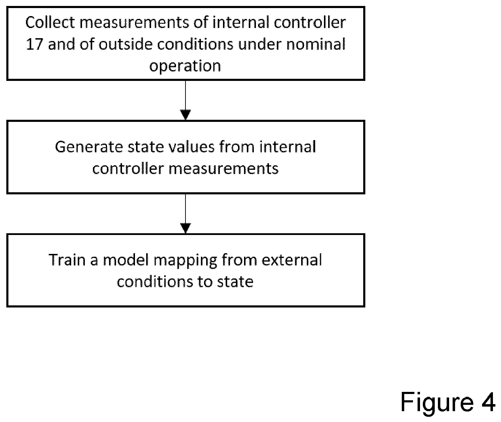

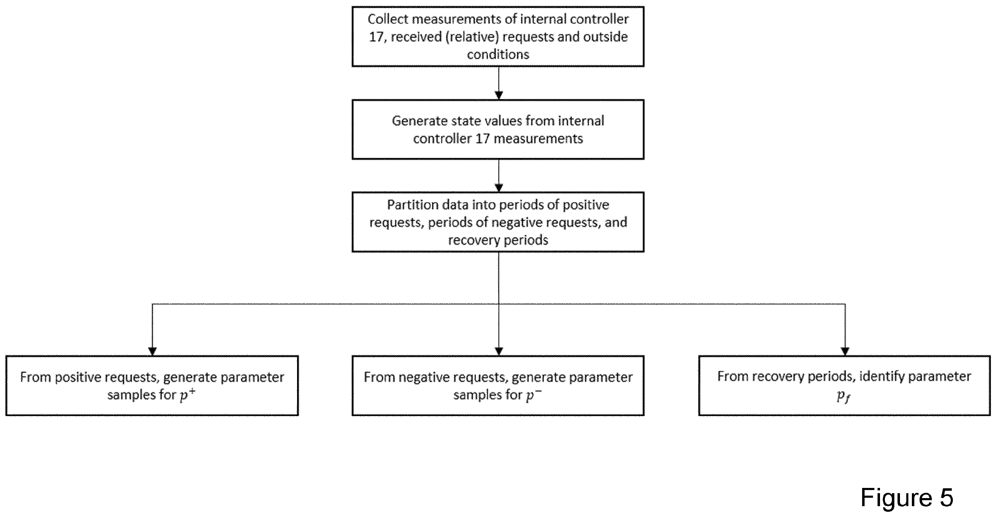

The different blocks 19a, 19b, 19c of the model can be learnt from data directly. For first and second blocks 19a, 19b, a (possibly nonlinear) model of the nominal state is learned from data of periods without requests, i.e. with the resource 13 operating normally, under the control of its internal controller 17 alone and subject to external conditions, as illustrated in the flow diagram of figure 4. An additional parameter in block 1 and the parameters in block 3 are learned from data of periods with requests for increased or decreased consumption, as illustrated in the block diagram of figure 5, and as will be explained further below.

Having forecasts for the external conditions, the state change can be predicted for different requests. If the predicted states do not violate the state constraints for a given request sequence, this sequence is classified as fulfillable, otherwise it is classified as not fulfillable. All request trajectories of a fixed length that are classified as fulfillable are collected in the set of feasible requests, as determined by a flexibility forecasting system as illustrated in figure 3. This set of feasible requests helps to distinguish between fulfillable and unfulfillable requests, and for a given request trajectory it can be determined whether it lies in the set or not.

To consider additional disturbances and uncertainty, a notion of conservativeness is encoded in the parameters of the third block 19c through the use of risk measures. A general approach to quantifying uncertainty with risk measures is presented in D. Bertsimas, D. B. Brown, "Constructing Uncertainty Sets for Robust Linear Optimization," Operations Research, 2009, 57(6):1483-1495, https://doi.org/10.1287/opre.1080.0646 but with a focus on financial applications.

This approach allows different confidence levels $\alpha$ for the ability to fulfill flexibility requests to be defined, which may also serve as a free parameter for the user to trade-off possible incentives for promising flexibility and penalties for not being able to provide this flexibility. This uncertainty quantification is again fully data-driven, requiring the same data as for the parameter identification of the third block 19c.

Flexibility can be reported to a higher-level Demand Response management system implemented in system controller 15 or elsewhere, by giving the maximum $p_{max}$ and minimum $p_{min}$ available power for certain time intervals for the one or more resources 13, together with a confidence of those availabilities. In this way, an aggregation at the higher level is facilitated. A schematic of the prediction of the minimum and maximum available power levels $p_{min}, p_{max}$ for a time interval of $N$ steps, starting from state $s_t$ with confidence level $\alpha$ and predictions of the external conditions $e_t, ..., e_{t+N}$, is given in flexibility forecasting system illustrated in Figure 3.

It should be noted that both the virtual battery model 19 and flexibility forecasting system 21 are typically implemented in software.

### Detailed methodology

In the foregoing description, the at least one electrical power consuming resource 13 with controllable demand is a building with a HVAC system. The skilled person knows how to adapt the principles described below to other types of resource 13 such as, but not limited to, those mentioned above.

Special notation used below: The indicator function of the set {0} is denoted by $\chi$, so $\chi_q = \begin{cases} 1, \text{ if } q = 0 \\ 0, \text{ if } q \neq 0 \end{cases}$ and the request trajectory $[r_0, ..., r_{k-1}]$ as $r_{0;k-1}$ or simply r if the context is clear. The $N$-dimensional probability simplex is given by

$$\Delta^N = \{q \in \mathbb{R}^N : q_i \geq 0, i = 1, ..., N, \sum_{i=1}^N q_i = 1\}.$$ **0** and **1** denote a vector of appropriate size of zeros or ones, respectively, and the Kronecker product is denoted as $\otimes$. $k$ is the length of the particular request trajectory, i.e. the number of time steps (which are typically 15 minutes or 1 hour each step but

other lengths of time are possible) being considered for a particular sequence of requests.

### Model formulation

It is assumed that the state of a building 13 at time $t$, in terms of its thermal capacity, can be described by a scalar $s_t$, bounded by $s_{min}$ and $s_{max}$ (without loss of generality, $s_{min} = 0$ and $s_{max} = 1$). The state bounds depend on the thermal bounds which are related to comfort constraints in the building 13 which is the resource 13 in the present example, meaning that $s_t = 0$ indicates that no energy can be extracted from the virtual battery model 19 of the building 13 without violating comfort constraints, and $s_t$ = energy can be inserted into the virtual battery model of the building 13. In other words, if $s_t$ = decrease further in the context of electrical heating, or to increase further in the context of electrical cooling, and if $s_t$ = 13 cannot be allowed to rise further in the context of electrical heating, or to decrease further in the case of electrical cooling, without exceeding comfort constraints (e.g. a lower bound of 19°C and an upper bound of 24°C, though these boundaries can be set as required). More generally, storing/extracting *energy* in the virtual battery model 19 represents increasing/-decreasing the amount of *power* consumed by the building or other resource 13.

The following assumption is made for the internal controller 17:

**Assumption 1:** The internal controller 17 is able to keep the state $s_t$ in (0, 1) for all $t$ in nominal operation. When receiving flexibility requests, the internal controller 17 follows them as close as possible, without violating the state bounds (i.e. comfort constraints).

For now, the state $s_t$ is abstract, but a meaningful definition is introduced below.

The desired behaviour of the virtual battery model is as follows:

1. Under nominal operation, the state is dependent on the internal controller 17 behavior, which is in turn mostly dependent on the external conditions $e_t$

2. In normal operation or after a sequence of requests, the controller drives the state towards its nominal value. This behavior is not present when receiving requests from the system controller 15.

3. When receiving requests from the system controller 15, the state of the building 13 (i.e. its internal temperature) should change in direction of the request, but with possibly differing speed due to the buildings' equipment. An additional state change is incurred by a change in external conditions.

For modeling the state evolution in dependence of relative consumption requests $r_t$ (i.e. increasing or decreasing the planned consumption by $r_t$ at time $t$), we define the following model.

Definition 1 (Virtual Battery Model 19). Let $r_t \in \mathbb{R}$ denote a relative consumption request at time $t$ with respect to a baseline, and let $r_t^+ = \max(r_t, 0), r_t^- = \min(r_t, 0)$ be the positive and negative part of the request. With the external influences given by $e_t \in \mathbb{R}^m$ and a function $f$: $\mathbb{R}^m \to \mathbb{R}$ to approximate the nominal state in a request-free evolution, we model the state evolution as

$$\hat{s}_{t+1} = \hat{s}_t + p^+ r_t^+ + p^- r_t^- + p_f(f(e_t) - \hat{s}_t)\chi_{r_t} + \big(f(e_{t+1}) - f(e_t)\big)\big(1 - \chi_{r_t}\big)$$

[Equation 1]

depending on the parameters $p^+$, $p^-$ and $p_f$ model blocks of figure 2.

Note that the approximated state $\hat{s}_t$ given by the virtual battery model is no longer bounded between 0 and 1. Furthermore, $\hat{s}_t$ taking a value smaller than 0 or larger than 1 corresponds to a situation where the true state saturates at its boundaries and the internal controller 17 is not able to fulfill the relative consumption request from the system controller 15. Therefore, the state $\hat{s}_t$ is associated with being in [0,1] with feasible requests, and $\hat{s}_t \notin [0,1]$ with infeasible requests, as will be explained below.

The training of the virtual battery model is a two-step approach. Firstly, a nonlinear model $f(e_t)$ is learned from data obtained during the nominal operation of the buildings' controller, without any requests being received from the system controller 15, as illustrated in figure 4. Then the coefficients $p^+$, $p^-$ and $p_f$ can be identified respectively from request periods, in which an

increased or decreased consumption is requested by the system controller 15, and the recovery periods in which no request is received from the system controller 15 and the internal controller 17 operates under its own internal algorithm, as illustrated in figure 5.

For the learning approach, the following formulation is leveraged, which describes the dependence of the predicted state $\hat{s}_k$ on the starting state $s_0$ and the applied request trajectory $r_{0:k-1}$, denoting the vector of binary variables by $\chi_r = [\chi_{r_0}, \dots, \chi_{r_{k-1}}]^\mathsf{T}$. $k$ is again the number of time steps considered in this particular sequence.

**Lemma 1:** For a given state $s_0$ and a request trajectory $r$, the state $\hat{s}_k$ determined by the battery model evolution in [Equation 1] is given by:

$$\hat{s}_k = \big(1 - p_f\big)^{q_0^k} s_0 + \sum_{l=0}^{k-1} \big(1 - p_f\big)^{q_{l+1}^k} \Big(f(e_l)p_f\chi_{r_l} + p^+ r_l^+ + p^- r_l^- + \big(f(e_{l+1}) - f(e_l)\big)\big(1 - \chi_{r_l}\big)\Big)$$

[Equation 2]

with $q_l^k = \sum_{i=l}^{k-1} \chi_{r_i}$.

Utilizing a linear model and regarding unmodeled nonlinear dynamics or disturbances as uncertainty introducing quantities is used by prior art approaches in robust learning-based and set-membership based model predictive control. Contrary to prior art approaches, in the present approach, unmodeled dynamics and disturbances are embedded in the parameter uncertainty for $p^+$ and $p^-$, considered with respect to an uncertainty set computed from the parameter samples, by using risk measures.

**Parameter identification**

For uncertainty quantification, request sequences are considered, which are of the form $r_{0:k-1}$, either strictly positive (i.e. $r_i > 0$, $i = 0, \dots, k - 1$) (when the resource 13 is requested to consumer more power than it would otherwise) or strictly negative respectively (i.e. $r_i < 0$, $i = 0, \dots, k - 1$) (when the resource 13 is requested to consume less power than it would otherwise), for generating parameter samples of $p^+$ or $p^-$. $r_{0:k-1}$ is assumed to be followed by a request free period, and denote the corresponding state trajectory by $s_{0:k}$. We either have that the requests are fulfillable, i.e. $0 < s_i < 1$, $i = 0, \dots, k$ which we denote by setting an index $l = k$, or not fulfillable at a certain point $l$, with $l = \arg\min q$ s.t. $s_q = 0$ or $s_q =$ battery model, we have

$$s_{l-1} = s_0 + \sum_{i=0}^{l-2} \tilde{p}^{+/-} r_i + f(e_{l-1}) - f(e_0). \text{ [Equation 3]}$$

Therefore, a parameter sample takes the form

$$\tilde{p}^{+/-} = \left(s_{l-1} - f(e_{l-1}) - \left(s_0 - f(e_0)\right)\right) / \sum_{i=0}^{l-2} r_i.$$

To identify candidates for $p_f$, $s_{0:k}$ are considered that occur after a request period, so that $r_{0:k-1} = \mathbf{0}$ and $r_k \neq 0$. Furthermore, only data is used from the recovery periods that fulfill $|s_t - fe_t)| > \delta$ for some threshold $\delta \in \mathbb{R}_+$, for identifying $p_f$ based recovery period and not small perturbations due to model mismatch.

As in the identification of $p^+$ and $p^-$, $l$, either have that $|s_j - fe_j)| > \delta$, $i = 0, \ldots, k+1$ (thus $l = k+1$) or $l = \text{argmin } q$ s.t. $|s_q - fe_q)| \leq \delta$. Using the request-free evolution of the battery model (i.e. without requests from the system controller 15 to consume more or less power), the following minimization problem can be formulated, whose solutions give samples of the $p_f$ parameter:

$$\underset{p}{\text{argmin}}\left((1-p)^{l-1}s_0 + \sum_{i=0}^{l-2} p\, f(e_i)(1-p)^{l-2-i} - s_{l-1}\right)^2 \text{ [Equation 4]}$$

In the following, we will assume to have sample sets for the parameters $p^+$, $p^-$, denoted by $\mathcal{P}^+, \mathcal{P}^-$ with $|\mathcal{P}^+| = n_1$, $|\mathcal{P}^-| = n_2$. Furthermore, it can be assumed that sample sets are ordered, so $\mathcal{P}^+ = \{\tilde{p}_1^+, \ldots, \tilde{p}_{n_1}^+ : \tilde{p}_i^+ \leq \tilde{p}_j^+ \text{ if } i < j\}$, $\mathcal{P}^- = \{\tilde{p}_1^-, \ldots, \tilde{p}_{n_2}^- : \tilde{p}_i^- \leq \tilde{p}_j^- \text{ if } i < j\}$. The parameter $p_f$ is assumed to be fixed after identifying possible candidates, e.g. through taking the maximum or average over the collected samples. This choice is deliberate, because treating $p_f$ as stochastic and following through with the approach outlined below introduces combinatorial issues and nonlinearities in the uncertainty set computation, while having a minimal impact on the flexibility envelope computation, due to its influence in the recovery periods only.

## The set of feasible requests: set formulation

Using the result of Lemma 1 above, the set of feasible request trajectories of length $k$, starting from a state $s_0$, can be formulated as:

$$\mathcal{R}_k(s_0) = \{r : \mathbf{0} \leq [\hat{s}_0, \hat{s}_1, \cdots, \hat{s}_k]^\top \leq \mathbf{1}\} \text{ [Equation 5]}$$

This set is of interest for identifying specific feasible request trajectories for the flexibility envelope characterization.

For ease of notation, [Equation 2] can be written in the two following ways:

$$\hat{s}_k = c(k) + a_k(p^+, p^-)^\top \tilde{r}_k \text{ [Equation 6]}$$
$$= c(k) + b_k(\tilde{r}_k)^\top \begin{pmatrix} p^+ \\ p^- \end{pmatrix} \text{ [Equation 7]}$$

where

$$c(k) = (1-p_f)^{q_0^k} s_0 + \sum_{l=0}^{k-1} (1-p_f)^{q_{l+1}^k} \left(f(e_l)p_f \chi_{r_l} + \left(f(e_{l+1}) - f(e_l)\right)\left(1 - \chi_{r_l}\right)\right) \text{ [Equation 8]}$$

groups all the nonrequest parts (i.e. the terms which do not directly depend on requests from the system controller 15 to consume more or less power) and

$$a_k = \left[(1 - p_f)^{q_1^k}, \ldots, (1 - p_f)^{q_k^k}\right]^\top \otimes [p^+, p^-]^\top \ [\text{Equation 9}]$$

$$b_k = \left[\sum_{l=0}^{k-1}(1 - p_f)^{q_{l+1}^k} r_l^+, \ \sum_{l=0}^{k-1}(1 - p_f)^{q_{l+1}^k} r_l^-\right]^\top \ [\text{Equation 10}]$$

group the request parts either depending on the parameters $p^+$, $p^-$, request trajectory indicated by $\tilde{r}_k = [r_0^+, r_0^-, \cdots, r_{k-1}^+, r_{k-1}^-]^\top$. The set of feasible requests can then alternatively be written as

$$\mathcal{R}_k(s_0) = \bigcap_{l=0}^{k} \{r: 0 \leq c(l) + b_l(\tilde{r}_l)^\top (p^+, p^-)^\top \leq 1\} \ [\text{Equation 11}]$$

$$= \bigcap_{l=0}^{k} \{r: 0 \leq c(l) + a_l(p^+, p^-)^\top \tilde{r}_l \leq 1\} \ [\text{Equation 12}]$$

$$= \bigcap_{l=0}^{k} \{r: \tilde{b}_l \leq \tilde{a}_l \tilde{r}_l\} \ [\text{Equation 13}]$$

with $\tilde{b}_l = cl, cl^\top$ and $\tilde{a}_l = a_l(p^+, p^-), -a_l(p^+, p^-)]^\top$

## Uncertainty characterisation

Considering a fixed request trajectory r, its feasibility depends only on the parameters $p^+, p^-$, of the $\tilde{a}_l$. $p^+, p^-$ from the identified sets $\mathcal{P}_1, \mathcal{P}_2$, we construct a sample set for each $\tilde{a}_l$, denoted by $\tilde{\mathcal{A}}_l$ with $|\tilde{\mathcal{A}}_l| = n_1 n_2 =: N$. In the following, a single set from the intersection in [Equation 13] is considered and therefore the index $l$ is dropped. We write the set of samples as $\tilde{\mathcal{A}} = \{a_1, \ldots, a_N\}$ and the data matrix as $A = [a_1, \ldots, a_N]$. On the nature of the samples, the following assumption is made:

**Assumption 2.** The unknown $\tilde{a}$ is a random variable on a finite probability space $(\Omega, \mathcal{F}, \mathbb{P})$ with $|\Omega| = N$, $\mathcal{F} = 2^\Omega$ and support $\tilde{\mathcal{A}}$.
wherein:

$\Omega$ is the sample space of the finite probability space.

$\mathcal{F}$ is the event space of the finite probability space.

$\mathbb{P}$ is the probability function of the probability space.

On the one hand, having $\tilde{a}$ as a random variable on a finite probability space is restrictive, since the true sample space $\Omega$ might be larger or even continuous. On the other hand, since data is the only knowledge we have about $\tilde{a}$, this assumption is aligned with the data-driven approach, and useful in practice (see D. Bertsimas and D. B. Brown, "Constructing uncertainty sets for robust linear optimization," Operations Research, vol. 57, no. 6, pp. 1483-1495, Dec. 2009 and assumption 3 below).

## Robustness via Conditional Value at Risk

Having laid the foundations for representing uncertainty in the set of feasible trajectories, a specific risk measure is now exploited, the Conditional Value at Risk (CVaR), as a way to specify how the uncertainty is dealt with. Specifically, user preferences are taken into account, to trade off conservativeness and the size of the feasible set. For this, results from Bertsimas and Brown *(op cit)* are relied upon.

In the foregoing, the main concepts for the specific approach outlined here are presented, and reference is made to S. Uryasev, "Conditional value-at-risk: optimization algorithms and applications," in Proceedings of the IEEE/IAFE/INFORMS 2000 Conference on Computational Intelligence for Financial Engineering (CIFEr) (Cat. No.00TH8520), 2000, pp. 49-57, and F. Delbaen, "Coherent risk measures on general probability spaces," Advances in Finance and Stochastics (Essays in honour of Dieter Sondermann), vol. 35, 01 2002.

**Definition 2** (Conditional Value at Risk). Let $(\Omega, \mathcal{F}, \mathbb{P})$ be a finite probability space with $\Omega = \{\omega_1, \dots, \omega_N\}$, $\mathbb{P}(\omega_i) = p_i$, and let $\mathcal{X}$ be a linear space of random variables on $\Omega$. The conditional value at risk for $X \in \mathcal{X}$ with probability level $\alpha$ is defined as

$$\mathrm{CVaR}_\alpha(X) = \max_{q \in \mathcal{Q}} \frac{1}{N} \sum_{i=1}^{N} - q_i X(\omega_i) \quad \text{[Equation 14]}$$

with $\mathcal{Q}$ its generating family, given by $\left\{q \in \Delta^N : q_i \le \frac{p_i}{\alpha}\right\}$.

An intuition about the meaning of CVaR can be drawn from its continuous probability space definition for atomless distributions (this intuition is inexact in the finite case, but nevertheless helpful). If we consider a constraint $\tilde{a}^\mathsf{T} x \ge b$, then $\mathrm{CVaR}_\alpha(\tilde{a}^\mathsf{T} x - b)$ gives the expected constraint violation in the $\alpha$-% worst cases. This motivates the use of the risk-aversion constraint $\mathrm{CVaR}_\alpha(\tilde{a}^\mathsf{T}x - b) \le 0$. Note that this constraint implies both constraint satisfaction in expectation (note that choosing $\alpha = 1$ corresponds directly to constraint satisfaction in expectation) and constraint satisfaction with probability $\ge 1 - \alpha$.

Risk aversion constraints are applied to the individual constraints in [Equation 13] and utilize the reformulation with robust uncertainty sets presented in Theorem 3.1 of Bertsimas and Brown (*op cit*). This is possible since CVaR is a coherent risk measure (i.e. it fulfills the properties of monotonicity, translation invariance, convexity, and positive homogeneity).

Theorem 1. *For ã as in Assumption 2, we have*

$$\left\{r : \mathrm{CVaR}_\alpha\left(\tilde{a}^\mathsf{T} r - \tilde{b}\right) \le 0\right\} = \left\{r : a^\mathsf{T} r \ge \tilde{b} \quad \forall a \in \mathcal{U}\right\} \quad \text{[Equation 15]}$$

with $\mathcal{U} = \mathrm{conv}(\{Aq : q \in \mathcal{Q}\})$, and $\mathcal{Q}$ the family of generating measures for $\mathrm{CVaR}_\alpha$.

Note that Theorem 1 is not limited to CVaR, but holds for general coherent risk measures. It provides a closed form description of the set of request trajectories that fulfill the risk aversion constraint, by taking those that robustly fulfill constraints with respect to the uncertainty set $\mathcal{U}$. For the feasibility of a given $r$, this implies checking constraint satisfaction for all $a \in \mathcal{U}$ and for all uncertainty sets corresponding to the $k + 1$ different constraints.

From Definition 2, the uncertainty set construction can directly be observed as in Theorem 1 for $\mathrm{CVaR}_\alpha$, namely

$$\mathcal{U} = \mathbf{conv}\left(\left\{Aq : q \in \Delta^N, q_i \le \frac{p_i}{\alpha}\right\}\right),$$ with the data matrix $A$. In the case of uniform probabilities of the samples (i.e.

$p_i = \frac{1}{N}$) and $\alpha$ chosen as $\frac{j}{N}$ for some $j \in \{1, \dots, N\}$, the uncertainty set is the convex hull of all j-point averages of the

samples in $\tilde{\mathcal{A}}$. These are the uncertainty sets that are focused on in the following, for two reasons: Firstly, a weighting of the samples is not considered, which makes the choice of uniform probabilities natural. Secondly, for $N$ large enough, the

choice of $\alpha$ as $\frac{j}{N}$ offers a fine discretization, while also providing a straightforward way of computing the uncertainty set.

The advantage of computability therefore outweighs the limitation of choice through the discretization.

**Application**

The virtual battery model 19 with uncertainty quantification is now used to show how feasibility of fixed request trajectories can be tested. This has direct application in the computation of flexibility envelopes, which is demonstrated in a simulation example.

**Feasibility of Request Trajectories**

To test whether a request trajectory $r$ is classified as feasible, an uncertainty set $\mathcal{U}$ is built for a given $\alpha = \frac{j}{N}$,

and the fulfilment of the constraints in [Equation 13] is checked (i.e. if $r$ fulfils all said constraints, the request is feasible, but if not, it is infeasible). However, characterizing the convex hull of all *j*-point averages is not straightforward, and constructing and testing all combinations is combinatorially infeasible already for moderate values of $j$ and $N$. To alleviate this issue, we make the following observation. Due to the linearity of the $a_l(p^+, p^-)$ from [Equation 6] in $p^+$, $p^-$, $j$ of the $(p^+, p^-)$ pairs in $\mathcal{P}^+ \times \mathcal{P}^-$, instead of their induced $a$ samples, and whether the request is within the set of feasible requests of [Equation 11] is checked because of the equivalence of [Equation 6] and [Equation 7]. We denote this set of $j$-point averages by

$$\tilde{\mathcal{P}}_j = \{\tfrac{1}{j}\textstyle\sum_{i=1}^{j} \tilde{p}_i : \tilde{p}_i \in \mathcal{P}^+ \times \mathcal{P}^-, \tilde{p}_l \neq \tilde{p}_k \text{ for } l \neq k\}.$$

To test the containment of $r$ in $\mathcal{R}_k(s_0)$, we only need to consider the tuples in $\tilde{\mathcal{P}}_j$ leading to the minimum and maximum values in [Equation 7]. This can be done in the following manner for all $l \in \{0, \ldots, k\}$:

1. Find $p_1 \in \mathcal{P}^+ \times \mathcal{P}^-$ that minimizes (or maximizes) $b_l(\bar{r}_l)^\mathsf{T}p$.

2. Starting from $p_1$, iteratively find $p_2, \ldots, p_j \in \mathcal{P}^+ \times \mathcal{P}^-$ s.th. $p_i = \arg\min_{p \in \mathcal{P}^+ \times \mathcal{P}^- \setminus \{p_1, \ldots, p_{i-1}\}} b_l(\bar{r}_l)^\mathsf{T}p$ (or arg max).

3. Let $p = \frac{1}{j}\sum_{i=1}^{j} p_j$.

4. If $c(l) + b_l(\bar{r}_l)^\mathsf{T}p < 0$ (or $> 1$), $r$ is classified as infeasible.

Due to the linearity of the considered cost function, the solution $p_1$ in step 1 is attained at one of the four points

$$\left(\tilde{p}_1^+, \tilde{p}_1^-\right), \left(\tilde{p}_{n_1}^+, \tilde{p}_1^-\right), \left(\tilde{p}_1^+, \tilde{p}_{n_2}^-\right), \left(\tilde{p}_{n_1}^+, \tilde{p}_{n_2}^-\right).$$

**Flexibility Envelopes**

Available flexibility for each time in a day ahead prediction is quantified, with flexibility envelopes similar to the ones introduced in R. D'hulst et al., "Demand response flexibility and flexibility potential of residential smart appliances: Experiences from large pilot test in Belgium," Applied Energy, vol. 155, pp. 79-90, 2015, and used in J. Gasser, H. Cai, S. Karagiannopoulos, P. Heer, and G. Hug, "Predictive energy management of residential buildings while self-reporting flexibility envelope," Applied Energy, vol. 288, p. 116653, Apr. 2021.

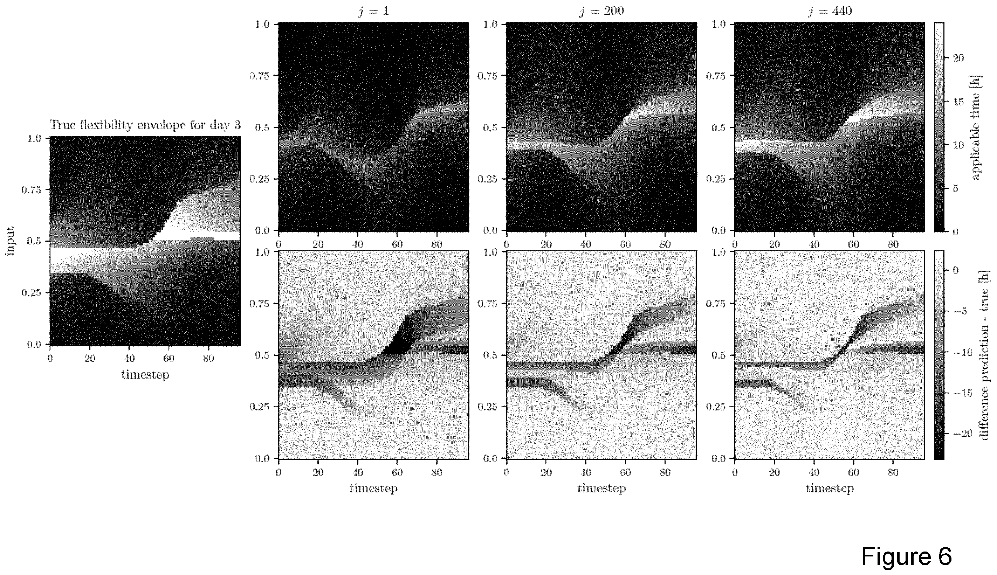

Instead of computing energy bounds, the virtual battery model 19 with its state bounds is used to define the flexibility envelopes with explicit power levels based on a given baseline. The predicted states under nominal operation, given by $f(e_t)$ for each $t$, are used as starting states for the pointwise flexibility computation. For the discretized power levels of interest, a request trajectory is computed as the needed deviation from the baseline to keep this power level, and then the feasibility of this trajectory is tested as presented above. This is done in an iterative fashion with increasing length of the considered trajectory, to get the maximum time of sustainability of those power levels. The maximum sustainable time is limited to 24 hours, since forecast errors might negatively influence the quality of longer predictions. An example of flexibility envelopes can be found in Figure 6.

**State Definition**

In the experiments, a specific state definition that fulfills the requirements of the abstract state $s_t$ as defined above is used. The two key quantities for this are: the available time of running the flexible assets of the building 13 (i.e. its HVAC system) at minimum power (denoted by $\underline{\Delta}_t$) and the available time for maximum power (denoted by $\overline{\Delta}_t$), without violating thermal constraints, e.g. an interior temperature between 19°C and 24°C. It is assumed that these are provided at each time step $t$ by the controller. Some commercial building management systems are able to provide measurements of this kind, for others, it is possible to estimate these quantities from equipment specifications and current measurements.

Following Assumption 1, it is assumed that $\underline{\Delta}_t + \overline{\Delta}_t > 0$.

**Definition 3** (State Variable). The state $s_t \in \mathbb{R}$ of a building at time $t$ is defined as

$$s_t := \frac{\Delta_t}{\Delta_t + \bar{\Delta}_t}. \text{ [Equation 16]}$$

By definition, we get that $s_t \in [0,1]$ at all time instances $t$. Moreover, this state captures the behavior we would expect from a battery like system: If the state is close to 1, a high consumption cannot be sustained for a long time, and therefore not much more additional thermal energy can be introduced into the system (i.e. is "stored" according to the virtual battery model), and vice versa for a state close to 0.

## Simulation results

The flexibility envelope prediction for the SimpleHouseRad-v0 model from the simulation model library Energym was considered. SimpleHouseRad-v0 is a lightweight Modelica model house with a 5-minute simulation timestep, modeled as a single zone, equipped with a heat pump whose electrical power fraction is the control input (i.e. it is in the range [0,1]). The building 13 model is controlled by a PI controller that measures and reports the state introduced above based on a simplified model of the building. This PI controller is also used to track the request trajectories as close as possible without violating the temperature bounds of 19 and 24 °C.

Data collection for constructing the virtual battery model is performed during the first 6 weeks of a year, using measurements of external conditions (the external temperature and irradiance in this example) from the city of Basel, Switzerland. In the first three weeks, no requests are sent to the building, such that state data under nominal controller operation is collected for learning the nonlinear model $f(e_t)$, using a kernel ridge regression model with squared exponential kernel. During the second three weeks, random but constant requests are sent to the building for random durations between 1 hour and 4 hours, alternating with request-free periods of 4 hours to 15 hours. Since the control input is the heat pump power fraction, input requests are considered instead of power requests. This data collection resulted in a total of 22 samples for $p^+$ and 20 samples for $p^-$, N

The flexibility envelopes of 10 days were computed, starting from the 22nd of January, for a weather file from Lausanne, Switzerland. Different values of the uncertainty parameter $j$ (and therefore $\alpha$) are used, and these were compared the results with the true available flexibility.

An example of this evaluation is given in Figure 6 for day 3 of the chosen 10 days in the test data. A decrease in conservatism is observable for an increase in $j$.

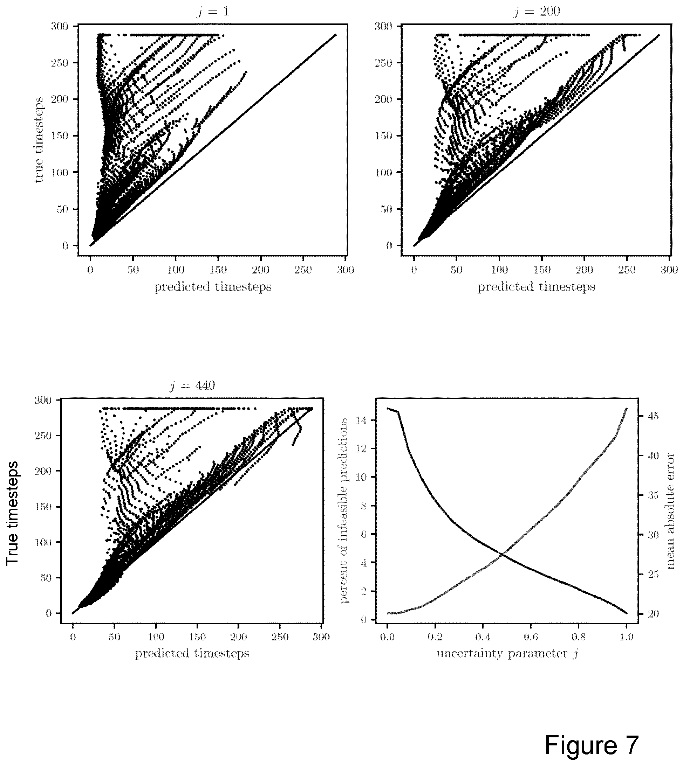

The pointwise predicted availability (in number of timesteps) vs. the true availability of the control inputs, is shown in the first three plots in Figure 7. Points that lie on the diagonal or slightly above are desirable, while points that are below the diagonal represent predictions that are more optimistic than the actual availability (and are therefore infeasible). For this specific day, no infeasible predictions for $j = 1$, were observed while for $j = 200$ and $j = 440$ the infeasible predictions make up about 3.4% and 15.7% respectively.

We get the following results regarding the percentage of infeasible predictions and mean absolute prediction error, displayed in the right plot of Figure 7. The percentage of infeasible predictions, over the course of the 10 days, is at about 0.45% for $j = 1$, and it rises up to about 14.80% for $j = 440$. On the other hand, the mean absolute prediction error decreases from about 46 timesteps for $j = 1$, to about 20 timesteps for $j = 440$, indicating a tradeoff between conservativeness and prediction error.

This tradeoff, together with the incentives for providing flexibility and penalties for not being able to provide the promised flexibility, can inform the selection of an uncertainty parameter $\alpha$ to be used in a flexibility scheme.

Although the invention has been described in terms of specific embodiments, variations thereto are possible without departing from the scope of the invention as defined in the appended claims.

## List of Main Parameters and Variables:

$e_t$: values like external temperature, irradiance, but also time of the day, day of the week, etc.

$s_t$: to indoor temperatures in relation to temperature bounds, stored energy, water levels in the case of a pump, etc. It represents the virtual state of charge of the virtual battery.

$r_t$: Relative consumption request at time t. Relative with respect to a consumption baseline which is defined through nominal controller behavior. Derived quantities are $r_t^+ = \max(0, r_t), r_t^- = \min(0, r_t)$, the positive and negative part of the request.

$f(e_t)$: Function mapping the external conditions to the nominal state. Nominal state means the behavior of the state if the controller installed in the system runs with normal operation and does not receive consumption requests.

$$\chi_a = \begin{cases} 1, & if \ a = 0 \\ 0, & if \ a \neq 0 \end{cases}$$ : Indicator function of the set {0}. Used to distinguish the cases of having requests and not having requests and therefore having different parts of the virtual battery model being "active".

$p_f$: Parameter that determines how fast the state converges to its nominal value if no requests are received. Important to capture the state behavior in "recovery" periods after requests.

$p^+$: Parameter that determines the linear state change due to positive relative consumption requests.

$p^-$: Parameter that determines the linear state change due to negative relative consumption requests.

$\alpha$: Uncertainty parameter to be set by the user. In the range (0,1]. In practice, we only consider a discretized subset of this range due to our standard choice of risk measure.

$\mu$: A risk measure. The above-defined approach works theoretically for general coherent risk measures, but in practice conditional value-at-risk (CVaR) is used.

$P$: Sample set of the parameters for $p^+, p^-$.

$U_\alpha$: Uncertainty set for checking the request feasibility.

**Claims**

1. Method of operating an electrical power distribution system (1), said power distribution system (1) comprising:

   - at least one electrical power generator (3, 5) with uncontrollable variable supply;
   - at least one electrical power consuming resource (13) with controllable demand and subject to at least one state constraint, said electrical power consuming resource (13) with controllable demand being arranged to be controlled by an internal controller (17);
   - a system controller (15) adapted to send requests to said internal controller (17) to request variation in said controllable demand;
   - an electrical power distribution network (9) arranged to transmit electrical power from said at least one electrical power generator (3, 5) to said at least one electrical power consuming resource (13) with controllable demand;

   **characterised in that** said method comprises steps of:

   - determining a virtual battery model (19) of said at least one electrical power consuming resource (13) with controllable demand,
   - determining a set of feasible power consumption requests that said at least one electrical power consuming resource (13) with controllable demand can fulfil, on the basis of said virtual battery model (19) in function of the current state of said electrical power consuming resource (13) with controllable demand and external conditions; and
   - sending requests from said system controller (15) to said internal controller (17) of said electrical power consuming resource (13) with variable demand to increase or decrease its power consumption on the basis of power available on said electrical power distribution network (9) and said set of feasible power consumption requests,

   wherein said virtual battery model (19) comprises:

   - a first block (19a) which receives a current state of said electrical power consuming resource (13) with controllable demand, and current external conditions, said first block (19a) determining a state change of said electrical power consuming resource (13) with controllable demand due to nominal behaviour of said internal controller (17), said first block (19a) being active only when said system controller (15) does not request said electrical power consuming resource (13) with controllable demand to consume more or less power,;
   - a second block (19b) which receives said current request, current external conditions and a prediction of said external conditions at a time in the future, said second block (19b) being active only when said system controller (15) requests that said electrical power consuming resource (13) with controllable demand consume more or less power, said second block (19b) outputting a state change of said electrical power consuming resource (13) with controllable demand due to predicted changes in external conditions;
   - a third block (19c) which receives the current request and determines a state change of said electrical power consuming resource (13) with controllable demand incurred by said current request,

   said state changes being combined such that said virtual battery model (19) outputs a predicted state of said electrical power consuming resource (13) with controllable demand at said time in the future on the basis of a current state of said electrical power consuming resource (13) with controllable demand, of said current external conditions, of said prediction of said external conditions at said time in the future, and of said current request.

2. Method according to the preceding claim, wherein said step of determining a set of feasible power consumption requests is carried out by a flexibility forecasting system (21) on the basis of:

- the current state of said electrical power consuming resource (13) with controllable demand;
- current external conditions;
- predictions of external conditions at at least one time in the future;
- a confidence level of the ability that said electrical power consuming resource (13) with controllable demand can fulfil a request;
- uncertainty in said set of feasible power consumption requests;

said flexibility forecasting system (21) outputting a maximum and minimum power consumption request that can be fulfilled at said at least one time in the future.

3. Method according to the preceding claim, wherein said uncertainty in said set of feasible power consumption requests exploits a coherent risk measure such as the Conditional Value at Risk.

4. Method according to any preceding claim, wherein said virtual battery model (19) comprises parameters determined by the steps of:

- operating said electrical power consuming resource (13) with controllable demand under nominal conditions while collecting measurements relating to said electrical power consuming resource (13) with controllable demand and of corresponding external conditions;
- generating a first set of state values on the basis of said measurements and said external conditions;
- operating said electrical power consuming resource (13) with controllable demand during periods in which increased power consumption is requested and during periods in which decreased power consumption is requested while collecting measurements relating to said electrical power consuming resource (13) with controllable demand and of corresponding external conditions;
- generating a second set of state values on the basis of said measurements and said external conditions obtained during periods in which increased power consumption is requested and during periods in which decreased power consumption is requested; and
- determining said parameters on the basis of said first and second set of state values and said corresponding external conditions.

5. Method according to any preceding claim, wherein said virtual battery model (19) is expressed as

$$\hat{s}_{t+1} = \hat{s}_t + p^+ r_t^+ + p^- r_t^- + p_f(f(e_t) - \hat{s}_t)\chi_{r_t} + \big(f(e_{t+1}) - f(e_t)\big)\big(1 - \chi_{r_t}\big)$$

wherein :

$\hat{s}_{t+1}$ is the predicted state of said electrical power consuming resource (13) with controllable demand at a time $t + 1$ in the future;
$\hat{s}_t$ is the state of said electrical power consuming resource (13) with controllable demand at time $t$;
$p^+$ is a parameter that determines a linear state change of said electrical power consuming resource (13) with controllable demand due to positive relative power consumption requests;

$r_t$ is a relative power consumption request at time $t$; $r_t^+$ is a positive relative power consumption request at time $t$;
$p^-$ is a parameter that determines a linear state change of said electrical power consuming resource (13) with controllable demand due to negative relative power consumption requests

$r_t^-$ is a negative relative power consumption request at time $t$;
$p_f$ is a parameter that determines how fast the state of said electrical power consuming resource (13) with controllable demand returns to its nominal value if no request is received;
$f(e_t)$ is a function of a vector of measurements of external conditions $e_t$ at time $t$;
$\chi_{r_t}$ has a value of 1 if a request $r$ at time $t$ is zero, and has a value of 0 otherwise;

$f(e_{t+1})$ is a function of a vector of predictions of external conditions $e_{t+1}$ at future time $t + 1$.

6. Method according to the preceding claim, wherein said set of feasible power consumption requests is:

$$\mathcal{R}_k(s_0) \quad = \bigcap_{l=0}^{k} \left\{ r \colon \tilde{b}_l \leq \tilde{a}_l \tilde{r}_l \right\}$$

with $\tilde{b}_l = [-c(l), c(l) - 1]^T$ and $\tilde{a}_l = [a_l(p^+, p^-), -a_l(p^+, p^-)]^T$
wherein:

$p^+$ is a parameter that determines a linear state change of said electrical power consuming resource (13) with controllable demand due to positive relative power consumption requests;
$p^-$ is a parameter that determines a linear state change of said electrical power consuming resource (13) with controllable demand due to negative relative power consumption requests;
k is the number of discrete time steps of operation of said electrical power consuming resource (13) with controllable demand;
r is a relative power consumption request trajectory;
$\tilde{r}_l$ consumption request trajectory up to request $l$;
$s_0$ is the state of the electrical power consuming resource at the current time; $c(l)$ is the predicted state at time $l$ without requests;
$al(p^+, p^-)$ is the vector of coefficients of the state change due to requests up to time $l$;
$\tilde{b}_l$ lower and upper state bound;
$\tilde{a}_l$ requests up to time $l$;

7. Computer program product comprising instructions which, when the program is executed by a computer, cause the computer to carry out the method steps of the method of any preceding claim.

**Patentansprüche**

1. Verfahren zum Betreiben eines Stromverteilungssystems (1), wobei das Stromverteilungssystem (1) umfasst:

- mindestens einen Stromgenerator (3, 5) mit unkontrollierbarer variabler Leistungsabgabe;
- mindestens eine Stromverbrauchsressource (13) mit steuerbarem Bedarf, die mindestens einer Zustandsbeschränkung unterliegt, wobei die Stromverbrauchsressource (13) mit steuerbarem Bedarf so ausgelegt ist, dass sie von einer internen Steuerung (17) gesteuert wird;
- eine Systemsteuerung (15), die dazu ausgelegt ist, Anfragen an die interne Steuerung (17) zu senden, um eine Änderung des steuerbaren Bedarfs anzufordern;
- ein Stromverteilungsnetz (9), das so ausgelegt ist, dass es elektrische Energie von dem mindestens einen Stromgenerator (3, 5) zu der mindestens einen Stromverbrauchsressource (13) mit steuerbarem Bedarf überträgt;

**dadurch gekennzeichnet, dass** das Verfahren die folgenden Schritte umfasst:

- Ermitteln eines Modells einer virtuellen Batterie (19) der mindestens einen Stromverbrauchsressource (13) mit steuerbarem Bedarf,
- Bestimmen einer Menge von realisierbaren Stromverbrauchsanforderungen, die die mindestens eine Stromverbrauchsressource (13) mit steuerbarem Bedarf erfüllen kann, auf der Grundlage des Modells einer virtuellen Batterie (19) in Abhängigkeit vom aktuellen Zustand der Stromverbrauchsressource (13) mit steuerbarem Bedarf und von externen Bedingungen; und
- Senden von Anforderungen von der Systemsteuerung (15) an die interne Steuerung (17) der Stromverbrauchsressource (13) mit variablem Bedarf, um deren Stromverbrauch auf der Grundlage der im Stromverteilungsnetz (9) verfügbaren Leistung und der Menge an realisierbaren Stromverbrauchsanforderungen zu erhöhen oder zu verringern,

wobei das Modell einer virtuellen Batterie (19) umfasst:

- einen ersten Block (19a), der einen aktuellen Zustand der genannten Stromverbrauchsressource (13) mit steuerbarem Bedarf sowie aktuelle äußere Bedingungen empfängt, wobei der genannte erste Block (19a) eine Zustandsänderung der genannten Stromverbrauchsressource (13) mit steuerbarem Bedarf aufgrund des Nennverhaltens der genannten internen Steuerung (17) bestimmt, wobei der erste Block (19a) nur dann aktiv ist, wenn die Systemsteuerung (15) von der Stromverbrauchsressource (13) mit steuerbarem Bedarf nicht verlangt, mehr oder weniger Leistung zu verbrauchen;

- einen zweiten Block (19b), der die aktuelle Anforderung, die aktuellen äußeren Bedingungen und eine Vorhersage der äußeren Bedingungen zu einem Zeitpunkt in der Zukunft empfängt, wobei der zweite Block (19b) nur dann aktiv ist, wenn die Systemsteuerung (15) anfordert, dass die Stromverbrauchsressource (13) mit steuerbarem Bedarf mehr oder weniger Leistung verbraucht, wobei der zweite Block (19b) eine Zustandsänderung der genannten Stromverbrauchsressource (13) mit steuerbarem Bedarf aufgrund vorhergesagter Änderungen der äußeren Bedingungen ausgibt;

- einen dritten Block (19c), der die aktuelle Anforderung empfängt und eine durch die genannte aktuelle Anforderung hervorgerufene Zustandsänderung der genannten Stromverbrauchsressource (13) mit steuerbarem Bedarf ermittelt, wobei die Zustandsänderungen so kombiniert werden, dass das Modell einer virtuellen Batterie (19) einen vorhergesagten Zustand der elektrischen Verbrauchsressource (13) mit steuerbarem Bedarf zu dem Zeitpunkt in der Zukunft ausgibt, basierend auf einem aktuellen Zustand der elektrischen Verbrauchsressource (13) mit steuerbarem Bedarf, den aktuellen äußeren Bedingungen, der Vorhersage der äußeren Bedingungen zu dem Zeitpunkt in der Zukunft und der aktuellen Anforderung.

2. Verfahren nach dem vorstehenden Anspruch, wobei der Schritt des Bestimmens einer Menge von realisierbaren Stromverbrauchsanforderungen von einem Flexibilitätsprognosesystem (21) auf der Grundlage folgender Faktoren durchgeführt wird:

- des aktuellen Zustands der elektrischen Stromverbrauchsressource (13) mit steuerbarem Bedarf;
- aktueller äußerer Bedingungen;
- vorhersagen der äußeren Bedingungen zu mindestens einem Zeitpunkt in der Zukunft;
- einem Konfidenzniveau hinsichtlich der Fähigkeit, dass die Stromverbrauchsressource (13) mit steuerbarem Bedarf eine Anforderung erfüllen kann;
- der Unsicherheit in der Menge der realisierbaren Stromverbrauchsanforderungen;

wobei das Flexibilitätsprognosesystem (21) eine maximale und eine minimale Stromverbrauchsanforderung ausgibt, die zu dem mindestens einen Zeitpunkt in der Zukunft erfüllt werden können.

3. Verfahren nach dem vorstehenden Anspruch, wobei die genannte Unsicherheit in der genannten Menge an realisierbaren Stromverbrauchsanforderungen ein kohärentes Risikomaß wie den Conditional Value at Risk nutzt.

4. Verfahren nach einem der vorstehenden Ansprüche, wobei das Modell einer virtuellen Batterie (19) Parameter umfasst, die durch die folgenden Schritte bestimmt werden:

- betreiben der Stromverbrauchsressource (13) mit steuerbarem Bedarf unter Nennbedingungen, während Messungen in Bezug auf die Stromverbrauchsressource (13) mit steuerbarem Bedarf und der entsprechenden äußeren Bedingungen erfasst werden;
- erzeugen eines ersten Satzes von Zustandswerten auf der Grundlage der Messungen und der äußeren Bedingungen;
- betreiben der Stromverbrauchsressource (13) mit steuerbarem Bedarf während Zeiträumen, in denen ein erhöhter Stromverbrauch angefordert wird, und während Zeiträumen, in denen ein verringerter Stromverbrauch angefordert wird, während Messungen in Bezug auf die Stromverbrauchsressource (13) mit steuerbarem Bedarf und der entsprechenden äußeren Bedingungen erfasst werden;
- erzeugen eines zweiten Satzes von Zustandswerten auf der Grundlage der genannten Messungen und der genannten äußeren Bedingungen, die während Zeiträumen, in denen ein erhöhter Stromverbrauch angefordert wird, und während Zeiträumen, in denen ein verringerter Stromverbrauch angefordert wird, erhalten wurden; und
- bestimmen der genannten Parameter auf der Grundlage des genannten ersten und zweiten Satzes von Zustandswerten und der genannten entsprechenden äußeren Bedingungen.

5. Verfahren nach einem der vorstehenden Ansprüche, wobei das Modell einer virtuellen Batterie (19) ausgedrückt wird als

$$\hat{s}_{t+1} = \hat{s}_t + p^+ r_t^+ + p^- r_t^- + p_f(f(e_t) - \hat{s}_t)\chi_{r_t} + (f(e_{t+1}) - f(e_t))(1 - \chi_{r_t})$$

wobei:

$\hat{s}_{t+1}$ ist der vorhergesagte Zustand der Stromverbrauchsressource (13) mit steuerbarem Bedarf zu einem Zeitpunkt $t + 1$ in der Zukunft;

$\hat{s}_t$ ist der Zustand der Stromverbrauchsressource (13) mit steuerbarem Bedarf zum Zeitpunkt $t$;

$p^+$ ist ein Parameter, der eine lineare Zustandsänderung der Stromverbrauchsressource (13) mit steuerbarem Bedarf aufgrund positiver relativer Stromverbrauchanforderungen bestimmt;

$r_t$ ist eine relative Stromverbrauchanforderung zum Zeitpunkt $t$;

$r_t^+$ ist eine positive relative Stromverbrauchanforderung zum Zeitpunkt $t$;

$p^-$ ist ein Parameter, der eine lineare Zustandsänderung der Stromverbrauchsressource (13) mit steuerbarem Bedarf aufgrund negativer relativer Stromverbrauchanforderungen bestimmt $r_t^-$ ist eine negative relative Stromverbrauchanforderung zum Zeitpunkt $t$;

$p_f$ ist ein Parameter, der bestimmt, wie schnell der Zustand der genannten Stromverbrauchsressource (13) mit steuerbarem Bedarf auf ihren Nennwert zurückkehrt, wenn keine Anforderung empfangen wird;

$f(e_t)$ ist eine Funktion eines Vektors von Messungen externer Bedingungen $e_t$ zum Zeitpunkt $t$;

$\chi_{r_t}$ hat den Wert 1, wenn eine Anforderung $r$ zum Zeitpunkt $t$ null ist, und andernfalls den Wert 0;

$f(e_{t+1})$ ist eine Funktion eines Vektors von Vorhersagen externer Bedingungen $e_{t+1}$ zu einem zukünftigen Zeitpunkt $t + 1$.

6. Verfahren gemäß dem vorstehenden Anspruch, wobei die Menge von realisierbaren Stromverbrauchanforderungen lautet:

$$\mathcal{R}_k(s_0) = \bigcap_{l=0}^{k} \{r : \tilde{b}_l \leq \tilde{a}_l \tilde{r}_l\}$$

mit $\tilde{b}_l = [-c(l), c(l) - 1]^T$ und $\tilde{a}_l = [a_l(p^+, p^-), -a_l(p^+, p^-)]^T$
wobei:

$p^+$ ist ein Parameter, der eine lineare Zustandsänderung der genannten Stromverbrauchsressource (13) mit steuerbarem Bedarf aufgrund positiver relativer Stromverbrauchanforderungen bestimmt;

$p^-$ ist ein Parameter, der eine lineare Zustandsänderung der genannten Stromverbrauchsressource (13) mit steuerbarem Bedarf aufgrund negativer relativer Stromverbrauchanforderungen bestimmt;

k ist die Anzahl der diskreten Zeitschritte des Betriebs der Stromverbrauchsressource (13) mit steuerbarem Bedarf;

$r$ ist eine relative Stromverbrauchanforderungsbahn;

$\tilde{r}_l$ Stromverbrauchanforderungsbahn bis zur Anforderung $l$;

$s_0$ ist der Zustand der Stromverbrauchsressource zum aktuellen Zeitpunkt;

$c(l)$ ist der vorhergesagte Zustand zum Zeitpunkt ohne Anforderungen $l$;

$a_l(p^+, p^-)$ ist der Vektor der Koeffizienten der Zustandsänderung aufgrund von Anforderungen bis zum Zeitpunkt $l$;

$\tilde{b}_l$ Anforderungen zu einer unteren und oberen Zustandsgrenze;

$\tilde{a}_l$ aufgrund von Anforderungen bis zum Zeitpunkt $l$;

7. Computerprogrammprodukt, das Anweisungen umfasst, die, wenn das Programm von einem Computer ausgeführt wird, den Computer veranlassen, die Verfahrensschritte des Verfahrens eines der vorstehenden Ansprüche auszuführen.

**Revendications**

1. Procédé d'exploitation d'un système de distribution d'énergie électrique (1), ledit système de distribution d'énergie (1) comprenant :

- au moins un générateur d'énergie électrique (3, 5) à production variable non contrôlable;

- au moins une ressource consommatrice d'énergie électrique (13) ayant une demande contrôlable et soumise à au moins une contrainte d'état, ladite ressource consommatrice d'énergie électrique (13) à demande contrôlable étant agencée pour être contrôlée par un contrôleur interne (17);
- un contrôleur de système (15) adapté pour envoyer des requêtes audit contrôleur interne (17) afin de requérir une variation de ladite demande contrôlable;
- un réseau de distribution d'énergie électrique (9) agencé pour transmettre de l'énergie électrique depuis ledit au moins un générateur d'énergie électrique (3, 5) vers ladite au moins une ressource consommatrice d'énergie électrique (13) à demande contrôlable;

**caractérisé en ce que** ledit procédé comprend les étapes consistant à :

- déterminer un modèle de batterie virtuelle (19) de ladite au moins une ressource consommatrice d'énergie électrique (13) à demande contrôlable,
- déterminer un ensemble de requêtes de consommation d'énergie réalisables que ladite au moins une ressource consommatrice d'énergie électrique (13) à demande contrôlable peut satisfaire, sur la base dudit modèle de batterie virtuelle (19) en fonction de l'état actuel de ladite ressource consommatrice d'énergie électrique (13) à demande contrôlable et des conditions externes; et
- envoyer des requêtes depuis ledit contrôleur de système (15) vers ledit contrôleur interne (17) de ladite ressource consommatrice d'énergie électrique (13) à demande variable afin d'augmenter ou de diminuer sa consommation d'énergie sur la base de l'énergie disponible sur ledit réseau de distribution d'énergie électrique (9) et dudit ensemble de requêtes de consommation d'énergie réalisables,

dans lequel ledit modèle de batterie virtuelle (19) comprend :

- un premier bloc (19a) qui reçoit un état actuel de ladite ressource consommatrice d'énergie électrique (13) à demande contrôlable, et les conditions externes actuelles, ledit premier bloc (19a) déterminant un changement d'état de ladite ressource consommatrice d'énergie électrique (13) à demande contrôlable dû au comportement nominal dudit contrôleur interne (17), ledit premier bloc (19a) n'étant actif que lorsque ledit contrôleur de système (15) ne demande pas à ladite ressource consommatrice d'énergie électrique (13) à demande contrôlable de consommer plus ou moins d'énergie;
- un deuxième bloc (19b) qui reçoit ladite requête actuelle, les conditions externes actuelles et une prévision desdites conditions externes à un moment futur, ledit deuxième bloc (19b) n'étant actif que lorsque ledit contrôleur de système (15) requiert que ladite ressource consommatrice d'énergie électrique (13) à demande contrôlable consomme plus ou moins d'énergie, ledit deuxième bloc (19b) produisant un changement d'état de ladite ressource consommatrice d'énergie électrique (13) à demande contrôlable en raison de prédictions de changements des conditions externes;
- un troisième bloc (19c) qui reçoit la requête actuelle et détermine un changement d'état de ladite ressource consommatrice d'énergie électrique (13) à demande contrôlable induit par ladite requête actuelle,

lesdits changements d'état étant combinés de telle sorte que ledit modèle de batterie virtuelle (19) génère un état prédit de ladite ressource consommatrice d'énergie électrique (13) à demande contrôlable audit moment futur sur la base d'un état actuel de ladite ressource consommatrice d'énergie électrique (13) à demande contrôlable, desdites conditions externes actuelles, de ladite prédiction desdites conditions externes audit moment futur, et de ladite requête actuelle.

2. Procédé selon la revendication précédente, dans lequel ladite étape de détermination d'un ensemble de requêtes de consommation d'énergie réalisables est mise en œuvre par un système de prévision de flexibilité (21) sur la base :

- de l'état actuel de ladite ressource consommatrice d'énergie électrique (13) à demande contrôlable;
- des conditions externes actuelles;
- des prévisions des conditions externes à au moins un moment futur;
- d'un niveau de confiance quant à la capacité de ladite ressource consommatrice d'énergie électrique (13) à demande contrôlable à satisfaire une requête;
- de l'incertitude dans ledit ensemble de requêtes de consommation d'énergie réalisables;

ledit système de prévision de flexibilité (21) produisant une requête de consommation d'énergie maximale et minimale pouvant être satisfaite audit au moins un moment futur.

3. Procédé selon la revendication précédente, dans lequel ladite incertitude dans ledit ensemble de requêtes de consommation d'énergie réalisables exploite une mesure de risque cohérente telle que la Valeur à risque conditionnelle.

4. Procédé selon l'une quelconque des revendications précédentes, dans lequel ledit modèle de batterie virtuelle (19) comprend des paramètres déterminés par les étapes consistant à :

- faire fonctionner ladite ressource consommatrice d'énergie électrique (13) à demande contrôlable dans des conditions nominales tout en collectant des mesures relatives à ladite ressource consommatrice d'énergie électrique (13) à demande contrôlable et aux conditions externes correspondantes;
- générer un premier ensemble de valeurs d'état sur la base desdites mesures et desdites conditions externes;
- faire fonctionner ladite ressource consommatrice d'énergie électrique (13) à demande contrôlable pendant des périodes au cours desquelles une consommation d'énergie accrue est requise et pendant des périodes au cours desquelles une consommation d'énergie réduite est requise, tout en collectant des mesures relatives à ladite ressource consommatrice d'énergie électrique (13) à demande contrôlable et aux conditions externes correspondantes;
- générer un deuxième ensemble de valeurs d'état sur la base desdites mesures et desdites conditions externes obtenues pendant des périodes au cours desquelles une augmentation de la consommation d'énergie est requise et pendant des périodes au cours desquelles une diminution de la consommation d'énergie est requise; et
- déterminer lesdits paramètres sur la base desdits premier et deuxième ensembles de valeurs d'état et desdites conditions externes correspondantes.

5. Procédé selon l'une quelconque des revendications précédentes, dans lequel ledit modèle de batterie virtuelle (19) est exprimé par

$$\hat{s}_{t+1} = \hat{s}_t + p^+ r_t^+ + p^- r_t^- + p_f(f(e_t) - \hat{s}_t)\chi_{r_t} + \big(f(e_{t+1}) - f(e_t)\big)\big(1 - \chi_{r_t}\big)$$

où :

$\hat{s}_{t+1}$ est l'état prédit de ladite ressource consommatrice d'énergie électrique (13) à demande contrôlable à un moment $t + 1$ dans le futur;
$\hat{s}_t$ est l'état de ladite ressource consommatrice d'énergie électrique (13) à demande contrôlable au moment $t$;
$p^+$ est un paramètre qui détermine un changement d'état linéaire de ladite ressource consommatrice d'énergie électrique (13) à demande contrôlable en raison de requêtes de consommation d'énergie relative positive;
$r_t$ est une requête de consommation d'énergie relative au moment $t$;

$r_t^+$ est une requête de consommation d'énergie relative positive au moment $t$;

$p^-$ est un paramètre qui détermine un changement d'état linéaire de ladite ressource consommatrice d'énergie électrique (13) à demande contrôlable en raison de requêtes de consommation d'énergie relative négative

$r_t^-$ est une requête de consommation d'énergie relative négative au moment $t$; p

$_f$ est un paramètre qui détermine la vitesse à laquelle l'état de ladite ressource consommatrice d'énergie électrique (13) à demande contrôlable revient à sa valeur nominale si aucune requête n'est reçue;
$f(e_t)$ est une fonction d'un vecteur de mesures des conditions externes $e_t$ au moment $t$;
$\chi_{r_t}$ a une valeur de 1 si une requête $r$ au moment $t$ est nulle, et a une valeur de 0 dans les autres cas;
$f(e_{t+1})$ est une fonction d'un vecteur de prévisions des conditions externes $e_{t+1}$ à un moment futur $t + 1$.

6. Procédé selon la revendication précédente, dans lequel ledit ensemble de requêtes de consommation d'énergie réalisables est :

$$\mathcal{R}_k(s_0) = \bigcap_{l=0}^{k} \big\{r : \tilde{b}_l \leq \tilde{a}_l \tilde{r}_l\big\}$$

avec $\tilde{b}_l = [-c(l), c(l) - 1]^{\mathsf{T}}$ et $\tilde{a}_l = [a_l(p^+, p^-), -a_l(p^+, p^-)]^{\mathsf{T}}$
dans lequel :

$p^+$ est un paramètre qui détermine un changement d'état linéaire de ladite ressource consommatrice d'énergie électrique (13) à demande contrôlable en raison de requêtes de consommation d'énergie relative positive;

$p^-$ est un paramètre qui détermine un changement d'état linéaire de ladite ressource consommatrice d'énergie électrique (13) à demande contrôlable en raison de requêtes de consommation d'énergie relative négative;

k est le nombre d'étapes temporelles discrètes de fonctionnement de ladite ressource consommatrice d'énergie électrique (13) à demande contrôlable;

$r$ est une trajectoire de requêtes de consommation d'énergie relative;

$\tilde{r}_l$ requêtes de consommation relative jusqu'à la requête $l$;

$s_0$ est l'état de la ressource consommatrice d'énergie électrique à l'instant présent;

$c(l)$ est l'état prédit à l'instant $l$ sans requête;

$al(p^+,p^-)$ est le vecteur des coefficients de changement d'état dus aux requêtes jusqu'à l'instant $l$;

$\tilde{b}_l$ inférieure et supérieure de l'état;

$\tilde{a}_l$ requêtes jusqu'à l'instant $l$;

7. Produit de programme informatique comprenant des instructions qui, lorsque le programme est exécuté par un ordinateur, amènent l'ordinateur à mettre en œuvre les étapes du procédé selon l'une quelconque des revendications précédentes.

Figure 1

Figure 2

Figure 3

Collect measurements of internal controller
17 and of outside conditions under nominal
operation

Generate state values from internal
controller measurements

Train a model mapping from external
conditions to state

Figure 4

Figure 5

Figure 6

Figure 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018287382 A

**Non-patent literature cited in the description**

- **D. BERTSIMAS** ; **D. B. BROWN**. Constructing Uncertainty Sets for Robust Linear Optimization. *Operations Research*, 2009, vol. 57 (6), 1483-1495, https://doi.org/10.1287/opre.1080.0646
- **D. BERTSIMAS** ; **D. B. BROWN**. Constructing uncertainty sets for robust linear optimization. *Operations Research*, December 2009, vol. 57 (6), 1483-1495
- **S. URYASEV**. Conditional value-at-risk: optimization algorithms and applications. *Proceedings of the IEEE/IAFE/INFORMS 2000 Conference on Computational Intelligence for Financial Engineering (CI-FEr)*, 2000, 49-57
- **F. DELBAEN**. Coherent risk measures on general probability spaces. *Advances in Finance and Stochastics (Essays in honour of Dieter Sondermann)*, January 2002, vol. 35
- **R. D'HULST et al.** Demand response flexibility and flexibility potential of residential smart appliances: Experiences from large pilot test in Belgium. *Applied Energy*, 2015, vol. 155, 79-90
- **J. GASSER** ; **H. CAI** ; **S. KARAGIANNOPOULOS** ; **P. HEER** ; **G. HUG**. Predictive energy management of residential buildings while self-reporting flexibility envelope. *Applied Energy*, April 2021, vol. 288, 116653